# EUROPÄISCHE PATENTANMELDUNG

(11) **EP 2 698 744 A1**
(43) Veröffentlichungstag der Anmeldung: **19.02.2014**
(21) Anmeldenummer: 12180525.3
(22) Anmeldetag: 15.08.2012
(51) Int. Cl.: G06K 19/00, F25D 13/02, G06K 7/14, G06K 19/06, G01N 1/42, A23L 3/36, G06Q 10/08

(54) **Vorrichtung zur Aufnahme von frischen Fleischwaren, zur Einbringung in einen Froster oder ein anderes Tiefkühlgerät**

(71) Anmelder: Vion GmbH, 40472 Düsseldorf (DE)
(72) Erfinder: Krause, Wolfram, 50668 Köln (DE); Barfuss, Norbert, 45739 Oer-Erkenschwick (DE)
(74) Vertreter: Buse, Mentzel, Ludewig Patentanwaltzkanzlei

(57) **Zusammenfassung**

Die Erfindung betrifft eine Vorrichtung (10) zur Aufnahme von frischen Fleischwaren zur Einbringung in einen Froster oder ein anderes Tiefkühlgerät. Dabei ist die Vorrichtung (10) ganz oder überwiegend aus einem Drahtgitter (11) geformt und nach Art eines Drahtkorbes (12) ausgebildet. Die Erfindung schlägt nun vor, dass ein von der Außenseite (13) der Vorrichtung (10) her ablesbarer, individueller Code (20) vorgesehen ist, der optoelektrisch auslesbar ist. Der Code (20) ist dabei auf einem tieftemperaturbeständigen und chemikalienresistenten Träger (22) befindlich.

## Beschreibung

Die Erfindung betrifft eine Vorrichtung der im Oberbegriff von Anspruch 1 genannten Art. Solche Vorrichtungen sind insbesondere dafür wichtig, frische Fleischwaren in ein Tiefkühlgerät, wie einen Froster, einzubringen bzw. durch ein solches Gerät hindurch zu transportieren.

Sollen Fleischwaren kleingeschnitten werden, beispielsweise um Gulasch, Geschnetzeltes oder Ähnliches herzustellen, ist es sinnvoll, diese vorher für eine kurze Zeit tiefzukühlen, damit die äußeren Schichten des Fleisches angefroren sind. Dann lässt es sich deutlich besser und weitgehend faserfrei schneiden. Die Tiefkühlung erfolgt üblicherweise bei ca. -50°C für 8 bis 9 Minuten, damit die äußeren 1 bis 2 mm des Fleischstückes tiefgefroren sind. Die Vorrichtungen müssen daher derartig niedrige Temperaturen aushalten und somit aus entsprechenden Materialien bestehen. Darüber hinaus müssen die Vorrichtungen nach der Verwendung auch gründlich gereinigt werden, wofür hohe Temperaturen und/oder Chemikalien Einsatz finden, damit keine Verunreinigungen an den Fleischwaren oder eine Keimbildung oder Ähnliches entstehen. Daher müssen die Vorrichtungen auch aus einem hitzebeständigen und chemikalienresistenten Material bestehen. Drüber hinaus muss das Material aus dem die Vorrichtung besteht auch für den Lebensmittelbereich zugelassen sein.

Heutzutage ist es für immer mehr Verbraucher wichtig, genau nachvollziehen zu können, woher das Fleisch, welches sie kaufen, stammt. Daher ist es für den Betrieb, der Fleisch zerlegt oder bearbeitet, wichtig, das betreffende Fleisch genau zu identifizieren. Das Fleisch, welches in ein Tiefkühlgerät oder einen Froster eingebracht wird, kann jedoch nicht direkt mit einem Etikett, einer Kennung, einem Code oder Ähnlichem versehen werden. Auch muss es unverpackt in das Tiefkühlgerät eingebracht werden, so dass auch kein Etikett und keine Kennung an einer Verpackung angebracht werden können. Die Kennzeichnung des Fleisches gestaltet sich also schwierig. Nachdem das Fleisch das Tiefkühlgerät bzw. den Froster passiert hat, wird es relativ schnell danach geschnitten bzw. weiterverarbeitet, bevor es wieder vollständig auftauen kann. Eine genaue Kennzeichnung des Fleisches während dieser beiden Prozessschritte, also während des Anfrierens und während des Schneidens ist somit sehr schwierig.

Aufgabe der Erfindung ist es daher, eine Vorrichtung bereitzustellen, mit deren Hilfe das Fleisch während des Passierens des Tiefkühlgerätes bzw. des Schneidgerätes und ggf. auch davor und danach individuell kennzeichnenbar ist. Diese Aufgabe wird durch die kennzeichnenden Merkmale von Anspruch 1 gelöst, denen folgende besondere Bedeutung zukommt.

An der Vorrichtung ist ein von der Außenseite her ablesbarer individueller Code vorgesehen, der optoelektrisch auslesbar ist. Der Code befindet sich dabei auf einem tieftemperaturbeständigen und chemikalienresistenten Träger. Hierdurch ist sichergestellt, dass auch nach Überführen des Codes in die tiefen Temperaturen des Tiefkühlgerätes bzw. des Frosters und auch nach einer Reinigung der Vorrichtung mit hohen Temperaturen und/oder Chemikalien der Code noch lesbar ist. Wird jetzt eine Fleischware in die Vorrichtung verbracht, kann ein vorher an der Fleischware befindlicher Code, eine Kennung oder Ähnliches ausgelesen werden und mit dem an der Vorrichtung befindlichen Code in logischen Zusammenhang gebracht werden, beispielsweise über eine Datenbank. Nachdem die Vorrichtung das Tiefkühlgerät bzw. den Froster passiert hat, kann der Code der Vorrichtung wieder ausgelesen werden, wodurch der Inhalt der Vorrichtung, also die darin befindliche Fleischware, genau bestimmbar ist. Daher ist es wichtig, dass die verschiedenen erfindungsgemäßen Vorrichtungen, die in einem Betrieb vorgesehen sind, alle unterschiedliche individuelle Codes aufweisen, so dass eine genaue Zuordnung zwischen der frischen Fleischware und der Vorrichtung möglich ist. Nachdem die frische Fleischware weiter verarbeitet wurde, kann die Vorrichtung gereinigt werden und für eine neue Fleischware zur Verfügung stehen. Die Vorrichtung selbst ist aus einem Drahtgitter vorgesehen und zwar nach Art eines Drahtkorbes, so dass an die frische Fleischware möglichst von allen Seiten her die gekühlte Atmosphäre des Kühlgerätes bzw. Frosters heranführbar ist. Hierdurch kann man sicherstellen, dass die Fleischware auch von allen Seiten anfriert und nicht nur von der Oberseite her.

Besonders vorteilhaft ist es, wenn das Drahtgitter und somit auch der Drahtkorb aus einem tieftemperaturbeständigen Edelstahl, wie beispielsweise V2A, bestehen. Dieser Edelstahl ist nicht nur temperaturbeständig, sondern auch resistent gegen viele Chemikalien und für die Lebensmittelproduktion zugelassen, so dass er auch den Anforderungen an die erforderliche Hygiene entsprechen kann. Er ist korrosions- und säurebeständig, so dass auch keine Verunreinigungen der Fleischwaren durch Korrosion o.ä. entstehen können.

Bevorzugterweise weist die Vorrichtung auch noch Füße in Form von Tragfüßen auf, damit sie nicht auf der Fläche, dem Transportband, dem Rollenband oder Ähnlichem direkt aufliegt, sondern noch ein Abstand von unten vorgesehen ist. So kann auch von unten unterhalb des Drahtkorbes kalte Luft an die Fleischware gelangen.

In einem weiteren Ausführungsbeispiel ist der Draht des Drahtgitters wellenförmig ausgebildet. Hierdurch haben die Fleischwaren noch kleinere Auflageflächen zu dem Drahtgitter, so dass die Atmosphäre des Tiefkühlgerätes bzw. Frosters die Fleischwaren noch besser von allen Seiten umschließen kann, um die Oberfläche des Fleisches gleichmäßig zu kühlen. Selbstverständlich sind aber auch Drahtgitter mit geraden Drähten möglich.

Eine erste bevorzugte Möglichkeit, den Code an der Vorrichtung anzubringen, ist ein als Etikett ausgebildeter Träger, auf welchem der Code angebracht wird, beispielsweise durch Drucken o.ä. Dieses Etikett besteht dann ganz oder teilweise aus einem Kunststoff. Dieses Etikett kann beispielsweise durch Kleben mit der Vorrichtung verbunden werden. Hierbei ist es wichtig, dass sowohl der Kunststoff als auch der Klebstoff des Etiketts tieftemperaturbeständig und chemikalienresistent sind. Der Kunststoff des Etiketts kann hierzu elektronenstrahlvernetzt sein und als Folie ausgebildet sein. Die Elektronenstrahlvernetzung von Kunststoffen bildet Werkstücke aus, die besonders hohen oder tiefen Temperaturen standhalten können und insgesamt Umwelteinflüssen gegenüber deutlich resistenter sind, als viele herkömmliche Kunststoffe.

Wird der Code auf einem Etikett vorgesehen, kann an der Vorrichtung eine Etikettfläche ausgebildet sein, auf die das Etikett aufbringbar bzw. klebbar ist. Selbstverständlich ist es auch möglich, das Etikett direkt an dem Drahtgitter zu befestigen.

Eine zweite Alternative der Anbringung des Codes an der Vorrichtung ist es, den Träger des Codes direkt am Drahtgitter vorzusehen und mit diesem unlösbar verbunden oder einstückig auszubilden. Der Code kann dann durch Ätzen, Färben, Fräsen, Lasern oder Ähnliches auf den Träger und somit auf die Vorrichtung aufgebracht werden. Wichtig ist in diesem Zusammenhang nur, dass der Code sowohl bei den tiefen Temperaturen des Tiefkühlgerätes bzw. Frosters als auch bei den hohen Temperaturen bzw. bei den Chemikalien bei der Reinigung nicht beschädigt wird und immer noch lesbar bleibt.

Der Code ist vorteilhafterweise als 2D-Code ausgebildet, insbesondere als QR-Code. Diese Codes können sehr einfach durch herkömmliche Lesegeräte ausgelesen werden. Andere Arten von Codes, beispielsweise Barcodes, sind selbstverständlich auch denkbar.

In einem bevorzugten Ausführungsbeispiel ist die Vorrichtung in ihrer Breite und Tiefe so ausgebildet, dass sie in einem Transportkasten der Größe E1 oder E2 gemäß DIN 55423-2 einbringbar ist und das Innere des Transportkastens in etwa ausfüllt. Solche Transportkästen sind starr und für den Mehrwegtransport bzw. die Lagerung von Fleisch und Fleischerzeugnissen vorgesehen und aus Kunststoff ausgebildet. Diese Transportkästen sind daher in der Fleischverarbeitung weit verbreitet. Soll nun eine Fleischware nach dem Passieren des Tiefkühlgerätes bzw. nach dem Kleinschneiden an eine weitere Stelle verbracht werden, beispielsweise um gewogen und/oder verpackt zu werden, so kann dies dadurch geschehen, dass die Vorrichtung in einen derartigen Transportkasten eingebracht wird. Der Transportkasten selber kann auch wieder einen Barcode oder 2D-Code oder anderen optoelektrisch auslesbaren Code beinhalten, einen Transponder umfassen oder auch anders gekennzeichnet bzw. beschriftet sein. Auch ist es möglich, in dem Transportkasten eine Ausnehmung vorzusehen, durch die der Code der erfindungsgemäßen Vorrichtung von außen ablesbar ist, beispielsweise durch ein optoelektrisches Lesegerät. Es ist auch möglich an dem Transportkasten selbst keinen individuellen Code vorzusehen und ihn nur als Transportmittel zu verwenden.

Weitere Vorteile und Ausführungsformen der Erfindung ergeben sich aus der nachfolgenden Beschreibung, den Unteransprüchen und den Zeichnungen. In den Zeichnungen ist die Erfindung in zwei Ausführungsbeispielen dargestellt. Es zeigen:
- Fig. 1:: eine erfindungsgemäße Vorrichtung mit auf dem Drahtgitter aufgeklebtem Etikett von vorne,
- Fig. 2:: eine erfindungsgemäße Vorrichtung mit auf einer Etikettfläche aufgeklebtem Etikett von vorne,
- Fig. 3:: eine Vorrichtung in einem Transportkasten von vorne,
- Fig. 4:: die Vorrichtung im Transportkasten von Fig. 3 von oben.

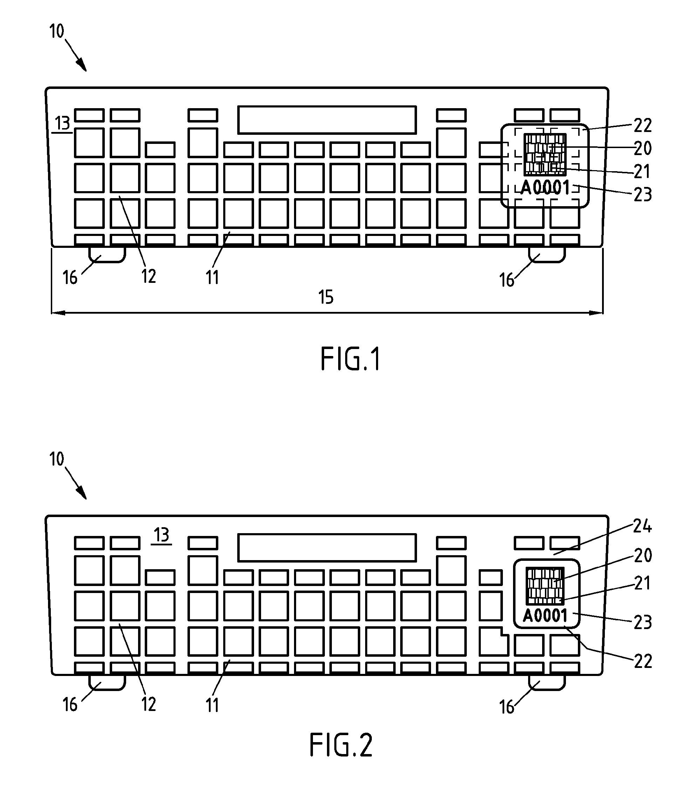

Die Fig. 1 zeigt eine erfindungsgemäße Vorrichtung 10, die hier überwiegend aus einem Drahtgitter 11 besteht und nach Art eines Drahtkorbes 12 ausgebildet ist. Man erkennt auch die Füße 16, die dafür sorgen, dass sich zwischen dem Drahtkorb 12 und der Fläche, auf der er steht, ein Abstand befindet. Dies bewirkt, dass die kalte Atmosphäre, die in dem nicht dargestellten Tiefkühlgerät oder Froster herrscht, die in der Vorrichtung 10 befindlichen Fleischwaren von allen Seiten gut umschließen kann. um die Oberfläche der Fleischwaren anzufrieren. Der Drahtkorb 12 besteht aus einem tieftemperaturbeständigen und korrosionsfesten und chemikalienresistenten Edelstahl, hier aus V2A, der für die Lebensmittelindustrie zugelassen ist. Weiterhin erkennt man, dass ein Code 20, nämlich hier ein 2D-Code 21, von der Außenseite 13 der Vorrichtung 10 her ablesbar angebracht ist. Dieser Code 20 ist optoelektrisch auslesbar und befindet sich auf einem Träger 22, der hier als Etikett 23 ausgebildet ist. Dieses Etikett 23 ist direkt auf dem Drahtgitter 11 angeordnet.

Eine zweite Ausführungsform zeigt Fig. 2. Der Hauptunterschied besteht darin, dass der Träger 22, welcher den Code 20 trägt, auf einer Etikettfläche 24 angeordnet ist. Diese Etikettfläche 24 ist einstückig mit dem Drahtkorb 12 ausgebildet. Der Code 20 selbst befindet sich auf dem Träger 22, der auch hier als Etikett 23 ausgebildet ist, welches auf der Etikettfläche 24 angeordnet bzw. aufgeklebt ist.

Das Vorsehen des Codes 20 auf einem Etikett 23 hat den Vorteil, dass bei einer Beschädigung des Codes 20 das Etikett 23 ausgetauscht oder überklebt werden kann.

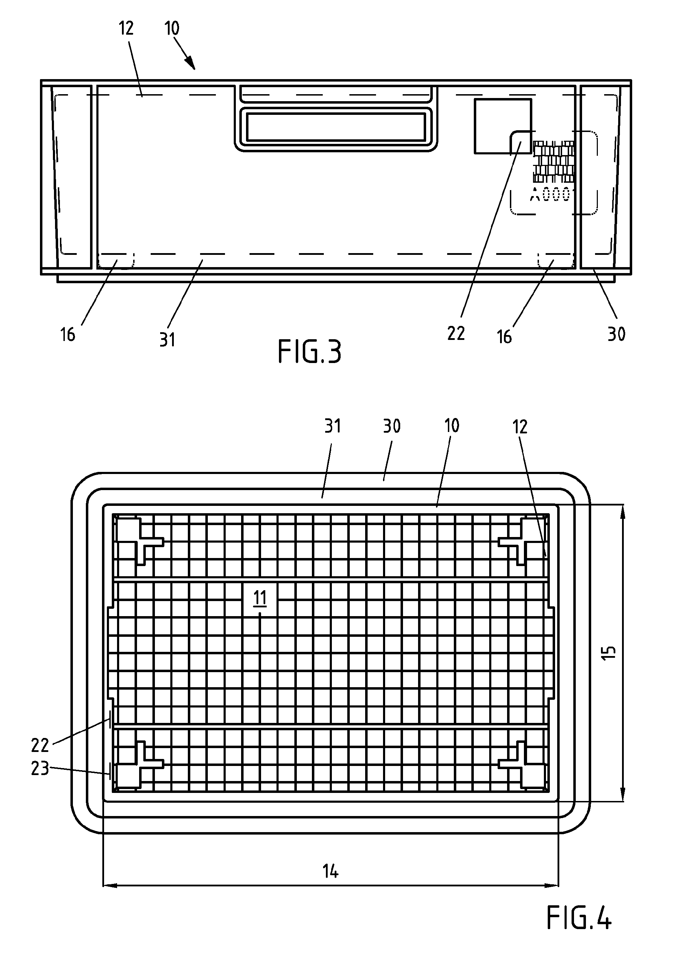

Die Breite 14 und Tiefe 15 der Vorrichtung 10 ist so ausgestaltet, dass die Vorrichtung 10 in einen Transportkasten 30 von der Größe E1 oder E2 gemäß DIN 55423-2 einbringbar ist, wie in den Fig. 3 und 4 gezeigt. Die Vorrichtung 10 füllt dabei das Innere 31 des Transportkastens 30 in etwa aus, ist aber noch leicht und ohne Reibung in den Transportkasten 30 einbringbar und auch wieder aus diesem entfernbar. Derartige Transportkästen 30 sind genormt und explizit für den Transport bzw. die Lagerung von Fleisch und Fleischwaren ausgebildet und zugelassen. Darüber hinaus sind derartige Transportkästen 30 auch stapelbar. Bildet man die Vorrichtung 10 so aus, dass sich ihre Breite 14 und Tiefe 15 an den Abmessungen des Inneren 31 des Transportkastens 30 orientieren, so kann eine mit Fleischwaren versehene Vorrichtung 10 auf einfache Art und Weise in den Transportkasten 30 eingebracht und auch wieder aus diesem entfernt werden. Dies ist insbesondere dann wichtig und sinnvoll, wenn nach dem Durchfahren des Gefriergerätes bzw. des Frosters das Fleisch noch in anderer Art oder an anderer Stelle verarbeitet, abgepackt, ausgewogen oder Ähnliches werden soll.

Die Transportkästen 30 sind in diesem Ausführungsbeispiel so ausgebildet, dass der Code 20 nicht von außerhalb des Transportkastens 30 ablesbar ist. Jedoch kann auch eine Ausnehmung am Transportkasten 30 vorgesehen sein, durch die der Code 20 von außerhalb des Transportkastens 30 auslesbar ist. Alternativ kann auch der Transportkasten 30 einen eigenen Code auf einem Etikett oder direkt auf seiner Außenseite aufweisen, der dann ebenfalls individuell ausgebildet ist und der dann mit dem Code 20 an der Vorrichtung 10 logisch verknüpft wird, beispielsweise über eine Datenbank. Auch ein Ausstatten des Transportkastens 30 mit einem einen Code beinhaltenden Transponder wie einem RFID-Tag ist denkbar.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abwandlungen und Abänderungen möglich. So ist es zum Beispiel auch möglich, die Vorrichtung nach jeder Benutzung und Reinigung mit einem neuen individuellen Code zu versehen.

### Bezugszeichenliste:

- 10: Vorrichtung
- 11: Drahtgitter
- 12: Drahtkorb
- 13: Außenseite von 10
- 14: Breite von 10
- 15: Tiefe von 10
- 16: Fuß
- 20: Code
- 21: 2D-Code
- 22: Träger
- 23: Etikett
- 24: Etikettfläche
- 30: Transportkasten
- 31: Inneres von 30

## Patentansprüche

1. Vorrichtung (10) zur Aufnahme von frischen Fleischwaren, zur Einbringung in einen Froster oder ein anderes Tiefkühlgerät,
wobei die Vorrichtung (10) ganz oder überwiegend aus einem Drahtgitter (11) besteht und nach Art eines Drahtkorbs (12) ausgebildet ist,
**dadurch gekennzeichnet,**
**dass** ein von der Außenseite (13) der Vorrichtung (10) her ablesbarer individueller Code (20) vorgesehen ist, der optoelektrisch auslesbar ist wobei der Code (20) auf einem tieftemperaturbeständigen und chemikalienresistenten Träger (22) befindlich ist.

2. Vorrichtung (10) nach Anspruch 1, **dadurch gekennzeichnet, dass** das Drahtgitter (11) aus einem tieftemperaturbeständigen und korrosionsbeständigen Edelstahl, insbesondere aus V2A besteht.

3. Vorrichtung (10) nach einem der Ansprüche 1 oder 2, **dadurch gekennzeichnet, dass** der Drahtkorb (12) mehrere Füße (16) aufweist, auf denen er stehen kann.

4. Vorrichtung (10) nach einem der Ansprüche 1 bis 3, **dadurch gekennzeichnet, dass** der Draht des Drahtgitters (11) wellenförmig ausgestaltet ist.

5. Vorrichtung (10) nach einem der Ansprüche 1 bis 4, **dadurch gekennzeichnet, dass** als Träger (22) des Codes (20) ein Etikett (23) dient, welches ganz oder teilweise aus einem Kunststoff besteht.

6. Vorrichtung (10) nach Anspruch 5, **dadurch gekennzeichnet, dass** das Etikett (23) durch Kleben mit der Vorrichtung (10) verbindbar ist.

7. Vorrichtung (10) nach einem der Ansprüche 5 oder 6, **dadurch gekennzeichnet, dass** der Kunststoff des Etiketts (23) elektronenstrahlvernetzt und als Folie ausgebildet ist.

8. Vorrichtung (10) nach einem der Ansprüche 5 bis 7, **dadurch gekennzeichnet, dass** eine Etikettfläche (24) an der Vorrichtung (10) ausgebildet ist, auf die das Etikett (23) aufbringbar ist.

9. Vorrichtung (10) nach einem der Ansprüche 1 bis 4, **dadurch gekennzeichnet, dass** der Träger (22) des Codes (20) direkt am Drahtgitter (11) befindlich und mit diesem unlösbar verbunden oder einstückig ausgebildet ist
und dass der Code (20) auf den Träger (22) durch Ätzen, Färben, Fräsen, Lasern o.ä. aufbringbar ist.

10. Vorrichtung (10) nach einem der Ansprüche 1 bis 9, **dadurch gekennzeichnet, dass** der Code (20) als 2D-Code (21) ausgebildet ist, insbesondere als QR-Code.

11. Vorrichtung (10) nach einem der Ansprüche 1 bis 10, **dadurch gekennzeichnet, dass** die Vorrichtung (10) in ihrer Breite (14) und Tiefe (15) so ausgestaltet ist, dass sie in einen Transportkasten (30) der Größe E1 oder E2 gemäß DIN 55423-2 einbringbar ist und das Innere (31) des Transportkastens (30) in etwa ausfüllt.
